# EUROPÄISCHE PATENTANMELDUNG

(11) **EP 4 181 037 A1**
(43) Veröffentlichungstag der Anmeldung: **17.05.2023**
(21) Anmeldenummer: 22207510.3
(22) Anmeldetag: 15.11.2022
(51) Int. Cl.: G06Q 10/00, G07C 5/08

(54) **PRÄDIKTIVE BETRIEBSANPASSUNG EINER SERVICEEINRICHTUNG FÜR FORTBEWEGUNGSMITTEL**

(30) Priorität: 16.11.2021 DE 102021212888
(71) Anmelder: Elektrobit Automotive GmbH, 91058 Erlangen (DE)
(72) Erfinder: Hönig, Maximilian, 60488 Frankfurt am Main (DE)
(74) Vertreter: Continental Corporation

(57) **Zusammenfassung**

Die vorliegende Erfindung betrifft ein Verfahren, ein Computerprogramm mit Instruktionen und eine Vorrichtung zum Betreiben einer Serviceeinrichtung für Fortbewegungsmittel. Die Erfindung betrifft zudem ein Verfahren und ein Computerprogramm mit Instruktionen zum Trainieren eines neuronalen Netzes zur Verwendung in einem solchen Verfahren oder in einer solchen Vorrichtung. In einem ersten Schritt werden Informationen zu Fortbewegungsmitteln in einem Umfeld der Serviceeinrichtung empfangen (S1). Für die Fortbewegungsmittel werden Wahrscheinlichkeiten bestimmt (S2), dass diese eine Einrichtung der Serviceeinrichtung aufsuchen. Auf Grundlage der bestimmten Wahrscheinlichkeiten wird zumindest ein Betriebsparameter der Serviceeinrichtung angepasst (S3).

## Beschreibung

Die vorliegende Erfindung betrifft ein Verfahren, ein Computerprogramm mit Instruktionen und eine Vorrichtung zum Betreiben einer Serviceeinrichtung für Fortbewegungsmittel. Die Erfindung betrifft zudem ein Verfahren und ein Computerprogramm mit Instruktionen zum Trainieren eines neuronalen Netzes zur Verwendung in einem solchen Verfahren oder in einer solchen Vorrichtung.

Fortbewegungsmittel, wie z.B. Kraftfahrzeuge, verfügend zunehmend über eine Datenanbindung an Server von Dienstanbietern, beispielsweise eine Cloudanbindung. Die von den Fortbewegungsmitteln bereitgestellten Informationen können z.B. für eine Cloud-basierte Erkennung des Straßenzustands, für Messungen der Luftqualität oder zum Erstellen von Wetterkarten genutzt werden.

Vor diesem Hintergrund beschreibt US 2020/0005633 A1 ein Cloud-basiertes System für vernetzte und automatisierte Fernstraßen. Das System umfasst eine Cloud-Service-Architektur zur Unterstützung der Kommunikation, des Betriebs, des Informationsaustauschs, der Steuerung, der Sicherheit oder des Schutzes der Privatsphäre. Die Cloud-Service-Architektur umfasst eine Benutzerkomponente, eine Fahrzeugkomponente, eine Infrastrukturkomponente, eine Netzwerkkomponente und eine Rechnerkomponente.

Für Betreiber von Serviceeinrichtungen für Fortbewegungsmittel, wie z.B. Tankstellen oder Ladesäulen, ist es hilfreich, Informationen über eine zu erwartende Auslastung der jeweiligen Serviceeinrichtung zur Verfügung zu haben, z.B. für eine Personalplanung. Derzeit wird das Wissen über zukünftige Auslastungen aus Erfahrungswerten der vergangenen Tage, Wochen oder Monate gewonnen. Nachteilig an diesem Ansatz ist, dass die Analyse vergangener Auslastungen nur eine relativ ungenaue Prognose erlaubt.

Es ist eine Aufgabe der Erfindung, verbesserte Lösungen für eine prädiktive Betriebsanpassung einer Serviceeinrichtung für Fortbewegungsmittel bereitzustellen.

Diese Aufgabe wird durch ein Verfahren zum Betreiben einer Serviceeinrichtung mit den Merkmalen des Anspruchs 1, durch ein Verfahren zum Trainieren eines neuronalen Netzes mit den Merkmalen des Anspruchs 4, durch ein Computerprogramm mit Instruktionen mit den Merkmalen des Anspruchs 9 und durch eine Vorrichtung mit den Merkmalen des Anspruchs 10 gelöst. Bevorzugte Ausgestaltungen der Erfindung sind Gegenstand der abhängigen Ansprüche.

Gemäß einem ersten Aspekt der Erfindung umfasst ein Verfahren zum Betreiben einer Serviceeinrichtung für Fortbewegungsmittel die Schritte:
- Empfangen von Informationen zu Fortbewegungsmitteln in einem Umfeld der Serviceeinrichtung;
- Bestimmen von Wahrscheinlichkeiten für die Fortbewegungsmittel, dass diese eine Einrichtung der Serviceeinrichtung aufsuchen; und
- Anpassen zumindest eines Betriebsparameters der Serviceeinrichtung auf Grundlage der bestimmten Wahrscheinlichkeiten.

Gemäß einem weiteren Aspekt der Erfindung umfasst ein Computerprogramm Instruktionen, die bei Ausführung durch einen Computer den Computer zur Ausführung der folgenden Schritte zum Betreiben einer Serviceeinrichtung für Fortbewegungsmittel veranlassen:
- Empfangen von Informationen zu Fortbewegungsmitteln in einem Umfeld der Serviceeinrichtung;
- Bestimmen von Wahrscheinlichkeiten für die Fortbewegungsmittel, dass diese eine Einrichtung der Serviceeinrichtung aufsuchen; und
- Anpassen zumindest eines Betriebsparameters der Serviceeinrichtung auf Grundlage der bestimmten Wahrscheinlichkeiten.

Der Begriff Computer ist dabei breit zu verstehen. Insbesondere umfasst er auch Workstations, verteilte Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Betreiben einer Serviceeinrichtung für Fortbewegungsmittel auf:
- ein Empfangsmodul zum Empfangen von Informationen zu Fortbewegungsmitteln in einem Umfeld der Serviceeinrichtung;
- ein Auswertemodul zum Bestimmen von Wahrscheinlichkeiten für die Fortbewegungsmittel, dass diese eine Einrichtung der Serviceeinrichtung aufsuchen; und
- ein Betriebsmodul zum Anpassen zumindest eines Betriebsparameters der Serviceeinrichtung auf Grundlage der bestimmten Wahrscheinlichkeiten.

Bei der erfindungsgemäßen Lösung werden Daten über Fortbewegungsmittel gesammelt, die potentiell eine Serviceeinrichtung aufsuchen können, die sich also in einem definierten Umfeld der Serviceeinrichtung befinden. Diese Daten werden verarbeitet, um jedem Fortbewegungsmittel eine Wahrscheinlichkeit zuzuordnen, mit der es eine bestimmte Serviceeinrichtung aufsuchen wird. Anhand der Wahrscheinlichkeiten kann berechnet werden, wie viele Fortbewegungsmittel in bestimmten Zeitfenstern in den verschiedenen Serviceeinrichtungen zu erwarten sind. Diese Daten werden den Serviceeinrichtungen zur Verfügung gestellt, damit diese zeitnah auf die bevorstehende Auslastung reagieren können. Die Betreiber haben auf diese Weise genauere Daten und können auf diese reagieren.

Gemäß einem Aspekt der Erfindung umfasst das Anpassen des zumindest einen Betriebsparameters das Zuschalten oder Abschalten einer Einrichtung, das Anpassen eines Tarifs oder eine Personalanpassung. Auf Basis der erwarteten Auslastung hat z.B. der Betreiber einer Tankstelle die Möglichkeit, zusätzliche Zapfsäulen oder Ladesäulen zu aktivieren oder nicht benötigte Zapfsäulen oder Ladesäulen zu deaktivieren. Zudem besteht die Möglichkeit, anhand eines erwarteten Strombedarfs einen geeigneten Stromtarif auszuwählen. Ebenso ist es möglich, Verkaufspreise an den erwarteten Absatz anzupassen oder die Anzahl des Personals an die erwartete Auslastung anzupassen, um Wartezeiten zu reduzieren oder Personalkosten zu minimieren.

Gemäß einem Aspekt der Erfindung werden die Wahrscheinlichkeiten für die Fortbewegungsmittel, dass diese eine Einrichtung der Serviceeinrichtung aufsuchen, durch ein trainiertes neuronales Netz bestimmt. Durch die Nutzung eines neuronalen Netzes, welches mit der Zeit lernt, kann die Bestimmung der Wahrscheinlichkeiten mit der Zeit verbessert werden. Auf diese Weise werden die Vorhersagen der Auslastung beständig zuverlässiger.

Erfindungsgemäß umfasst ein Verfahren zum Trainieren eines neuronalen Netzes zum Bestimmen einer Wahrscheinlichkeit für ein Fortbewegungsmittel, dass dieses eine Einrichtung einer Serviceeinrichtung aufsucht, die Schritte:
- Empfangen von Informationen zu einem Fortbewegungsmittel in einem Umfeld der Serviceeinrichtung;
- Bestimmen einer Wahrscheinlichkeit für das Fortbewegungsmittel, dass dieses eine Einrichtung der Serviceeinrichtung aufsucht;
- Empfangen von Informationen, ob das Fortbewegungsmittel eine Einrichtung der Serviceeinrichtung aufgesucht hat; und
- Trainieren des neuronalen Netzes mit den empfangenen Informationen.

Dementsprechend umfasst ein Computerprogramm Instruktionen, die bei Ausführung durch einen Computer den Computer zur Ausführung der folgenden Schritte zum Trainieren eines neuronalen Netzes zum Bestimmen einer Wahrscheinlichkeit für ein Fortbewegungsmittel, dass dieses eine Einrichtung einer Serviceeinrichtung aufsucht, veranlassen:
- Empfangen von Informationen zu einem Fortbewegungsmittel in einem Umfeld der Serviceeinrichtung;
- Bestimmen einer Wahrscheinlichkeit für das Fortbewegungsmittel, dass dieses eine Einrichtung der Serviceeinrichtung aufsucht;
- Empfangen von Informationen, ob das Fortbewegungsmittel eine Einrichtung der Serviceeinrichtung aufgesucht hat; und
- Trainieren des neuronalen Netzes mit den empfangenen Informationen.

Der Begriff Computer ist dabei breit zu verstehen. Insbesondere umfasst er auch Workstations, verteilte Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Bei der erfindungsgemäßen Lösung wird bevorzugt ein trainiertes neuronales Netz verwendet, um die Wahrscheinlichkeiten zu bestimmen, mit denen die Fortbewegungsmittel eine bestimmte Serviceeinrichtung aufsuchen werden. Zum Trainieren dieses neuronalen Netzes, vorzugsweise eines selbstlernenden Netzes, wird vom neuronalen Netz zunächst auf Basis der zur Verfügung stehenden Informationen zu einem Fortbewegungsmittel die Wahrscheinlichkeit bestimmt, dass das Fortbewegungsmittel eine bestimmte Serviceeinrichtung aufsucht. Mit Hilfe weiterer Informationen wird dann überprüft, ob das Fortbewegungsmittel tatsächlich eine Einrichtung der Serviceeinrichtung aufgesucht hat, d.h. es liegt eine Rückmeldung vor, wie akkurat die Vorhersage war. Mit diesen Informationen kann das neuronale Netz weiter trainiert werden, um so die Genauigkeit der Vorhersagen zu steigern.

Gemäß einem Aspekt der Erfindung umfassen die Informationen, ob das Fortbewegungsmittel eine Einrichtung der Serviceeinrichtung aufgesucht hat, Angaben zur Nutzung der Einrichtung. Beispielsweise können Angaben zur aufgenommenen Kraftstoff- oder Strommenge, zur Art des Kraftstoffs, zur angesteuerten Zapf- oder Ladesäule, zum gewählten Waschprogramm einer Waschstraße, etc. berücksichtigt werden. Diese Angaben erlauben ist, die Vorhersagen der Auslastung und gegebenenfalls des zu erwartenden Absatzes zu verfeinern.

Gemäß einem Aspekt der Erfindung ist die Serviceeinrichtung eine Tankstelle oder eine Ladestation. Für solche Serviceeinrichtungen lässt sich die zu erwartende Auslastung besonders gut prädizieren, da auf eine Vielzahl relevanter Daten zurückgegriffen werden kann. Grundsätzlich beschränkt sich die erfindungsgemäße Lösung aber nicht auf derartige Serviceeinrichtungen. Beispielsweise lässt sich auch die zu erwartenden Auslastung von Raststätten oder Parkplätzen vorhersagen.

Gemäß einem Aspekt der Erfindung umfassen die Informationen zu den Fortbewegungsmitteln Angaben zu einem Ladezustand, einem Kraftstoffvorrat, einer Kraftstoffart, einer Position oder einer Route. Die Angaben zum Ladezustand bzw. zum Kraftstoffvorrat lassen Rückschlüsse zu, zu welchem Zeitpunkt ein Aufladen oder Tanken erforderlich sein wird. Anhand der Position bzw. der Route kann bestimmt werden, welche Tankstellen oder Ladestationen mit einer relativ hohen Wahrscheinlichkeit aufgesucht werden und bei welchen dies sehr unwahrscheinlich ist. Die benötigte Kraftstoffart ist insbesondere hinsichtlich des zu erwartenden Absatzes von Interesse, erlaubt es aber auch, gezielter Zapfsäulen für bestimmte Kraftstoffarten zu aktivieren oder zu deaktivieren.

Gemäß einem Aspekt der Erfindung umfassen die Informationen zu den Fortbewegungsmitteln Angaben zu einem Bediener des Fortbewegungsmittels. Beispielsweise gibt es Fahrer, die bereits bei Erreichen der Hälfte des Kraftstoffvorrats tanken bzw. bei halber Akkuladung aufladen, während andere Fahrer dies erst bei Aufleuchten der Reserveanzeige durchführen. Derartige Informationen beeinflussen daher die Wahrscheinlichkeit, ob eine Tankstelle bzw. Ladestation aufgesucht wird.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Verfahren zum Betreiben einer Serviceeinrichtung für Fortbewegungsmittel;
- Fig. 2: zeigt schematisch eine erste Ausführungsform einer Vorrichtung zum Betreiben einer Serviceeinrichtung für Fortbewegungsmittel;
- Fig. 3: zeigt schematisch eine zweite Ausführungsform einer Vorrichtung zum Betreiben einer Serviceeinrichtung für Fortbewegungsmittel;
- Fig. 4: zeigt schematisch ein Verfahren zum Trainieren eines neuronalen Netzes zur Verwendung in dem Verfahren aus Fig. 1 oder in der Vorrichtung aus Fig. 2 oder Fig. 3; und
- Fig. 5: zeigt schematisch ein Systemdiagramm der erfindungsgemäßen Lösung.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

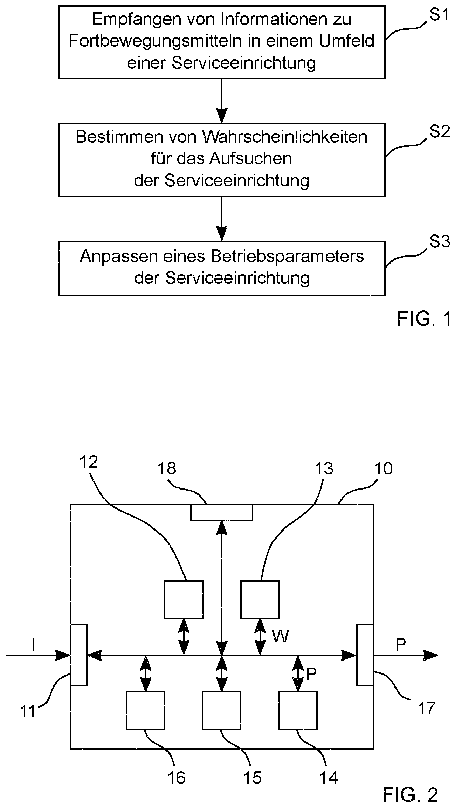

Fig. 1 zeigt schematisch ein Verfahren zum Betreiben einer Serviceeinrichtung für Fortbewegungsmittel. Bei der Serviceeinrichtung kann es sich z.B. um eine Tankstelle oder eine Ladestation handeln. In einem ersten Schritt werden Informationen zu Fortbewegungsmitteln in einem Umfeld der Serviceeinrichtung empfangen S1, beispielsweise Angaben zu einem Ladezustand, einem Kraftstoffvorrat, einer Kraftstoffart, einer Position, einer Route oder zu einem Bediener des Fortbewegungsmittels. Für die Fortbewegungsmittel werden Wahrscheinlichkeiten bestimmt S2, dass diese eine Einrichtung der Serviceeinrichtung aufsuchen. Dies geschieht bevorzugt durch ein trainiertes neuronales Netz. Auf Grundlage der bestimmten Wahrscheinlichkeiten wird zumindest ein Betriebsparameter der Serviceeinrichtung angepasst S3. Das Anpassen S3 des zumindest einen Betriebsparameters kann beispielsweise das Zuschalten oder Abschalten einer Einrichtung, das Anpassen eines Tarifs oder eine Personalanpassung umfassen.

Fig. 2 zeigt eine vereinfachte schematische Darstellung einer ersten Ausführungsform einer Vorrichtung 10 zum Betreiben einer Serviceeinrichtung für Fortbewegungsmittel. Bei der Serviceeinrichtung kann es sich z.B. um eine Tankstelle oder eine Ladestation handeln. Die Vorrichtung 10 hat einen Eingang 11, über den von einem Empfangsmodul 12 Informationen I zu Fortbewegungsmitteln in einem Umfeld der Serviceeinrichtung empfangen werden, beispielsweise Angaben zu einem Ladezustand, einem Kraftstoffvorrat, einer Kraftstoffart, einer Position, einer Route oder zu einem Bediener des Fortbewegungsmittels. Ein Auswertemodul 13 ist eingerichtet, Wahrscheinlichkeiten W für die Fortbewegungsmittel zu bestimmen, dass diese eine Einrichtung der Serviceeinrichtung aufsuchen. Zu diesem Zweck nutzt das Auswertemodul 13 bevorzugt ein trainiertes neuronales Netz. Ein Betriebsmodul 14 ist eingerichtet, zumindest einen Betriebsparameter P der Serviceeinrichtung auf Grundlage der bestimmten Wahrscheinlichkeiten W anzupassen. Der Betriebsparameter P kann dazu über einen Ausgang 17 der Vorrichtung 10 ausgegeben werden. Das Anpassen des zumindest einen Betriebsparameters P kann beispielsweise das Zuschalten oder Abschalten einer Einrichtung, das Anpassen eines Tarifs oder eine Personalanpassung umfassen.

Das Empfangsmodul 12, das Auswertemodul 13 und das Betriebsmodul 14 können von einem Kontrollmodul 15 gesteuert werden. Über eine Benutzerschnittstelle 18 können gegebenenfalls Einstellungen des Empfangsmoduls 12, des Auswertemoduls 13, des Betriebsmoduls 14 oder des Kontrollmoduls 15 geändert werden. Die in der Vorrichtung 10 anfallenden Daten können bei Bedarf in einem Speicher 16 der Vorrichtung 10 abgelegt werden, beispielsweise für eine spätere Auswertung oder für eine Nutzung durch die Komponenten der Vorrichtung 10. Das Empfangsmodul 12, das Auswertemodul 13, das Betriebsmodul 14 sowie das Kontrollmodul 15 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 11 und der Ausgang 17 können als getrennte Schnittstellen oder als eine kombinierte Schnittstelle implementiert sein.

In Fig. 2 sind alle Module 12-15 in einer gemeinsamen Vorrichtung 10 angeordnet. Es ist aber ebenso möglich, die Module 12-15 aufzuteilen. Beispielsweise kann sich das Betriebsmodul 14 in der Serviceeinrichtung befinden und Informationen zu den Wahrscheinlichkeiten von einem Backend empfangen, in dem die restlichen Module 12, 13, 15 angeordnet sind.

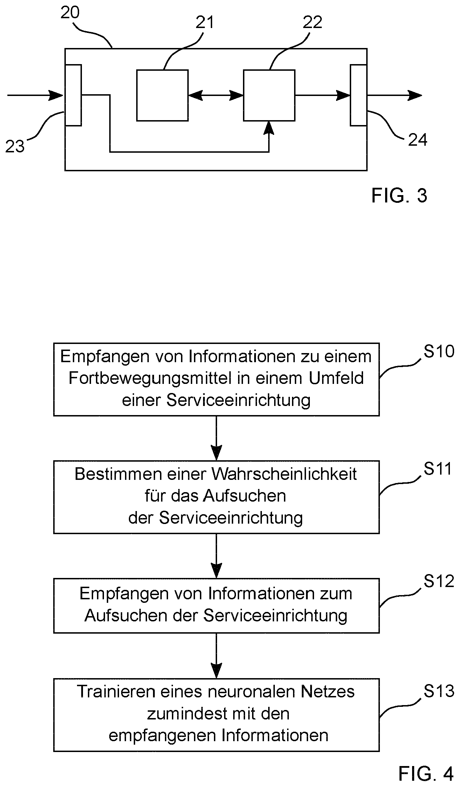

Fig. 3 zeigt eine vereinfachte schematische Darstellung einer zweiten Ausführungsform einer Vorrichtung 20 zum Betreiben einer Serviceeinrichtung für Fortbewegungsmittel. Die Vorrichtung 20 weist einen Prozessor 22 und einen Speicher 21 auf. Beispielsweise handelt es sich bei der Vorrichtung 20 um eine Workstation oder ein verteiltes System. Im Speicher 21 sind Instruktionen abgelegt, die die Vorrichtung 20 bei Ausführung durch den Prozessor 22 veranlassen, die Schritte gemäß einem der beschriebenen Verfahren auszuführen. Die im Speicher 21 abgelegten Instruktionen verkörpern somit ein durch den Prozessor 22 ausführbares Programm, welches das erfindungsgemäße Verfahren realisiert. Die Vorrichtung 20 hat einen Eingang 23 zum Empfangen von Informationen. Vom Prozessor 22 generierte Daten werden über einen Ausgang 24 bereitgestellt. Darüber hinaus können sie im Speicher 21 abgelegt werden. Der Eingang 23 und der Ausgang 24 können zu einer bidirektionalen Schnittstelle zusammengefasst sein.

Der Prozessor 22 kann eine oder mehrere Prozessoreinheiten umfassen, beispielsweise Mikroprozessoren, digitale Signalprozessoren oder Kombinationen daraus.

Die Speicher 16, 21 der beschriebenen Vorrichtungen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt schematisch ein Verfahren zum Trainieren eines neuronalen Netzes zur Verwendung in dem Verfahren aus Fig. 1 oder in der Vorrichtung aus Fig. 2 oder Fig. 3. In einem ersten Schritt werden Informationen zu einem Fortbewegungsmittel in einem Umfeld der Serviceeinrichtung empfangen S10, beispielsweise Angaben zu einem Ladezustand, einem Kraftstoffvorrat, einer Kraftstoffart, einer Position, einer Route oder zu einem Bediener des Fortbewegungsmittels. Zudem wird eine Wahrscheinlichkeit für das Fortbewegungsmittel bestimmt S11, dass dieses eine Einrichtung der Serviceeinrichtung aufsucht. Anschließend werden Informationen empfangen S12, ob das Fortbewegungsmittel tatsächlich eine Einrichtung der Serviceeinrichtung aufgesucht hat. Diese Informationen können zudem Angaben zur Nutzung der Einrichtung umfassen, z.B. eine bezogene Kraftstoff- oder Strommenge. Das neuronale Netz wird dann zumindest mit den empfangenen Informationen trainiert S13.

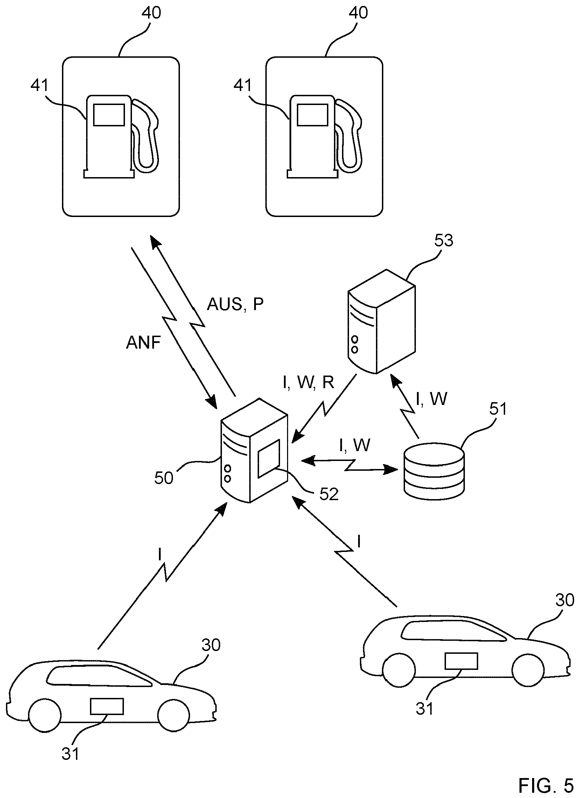

Fig. 5 zeigt schematisch ein Systemdiagramm der erfindungsgemäßen Lösung. Dargestellt sind zwei Fortbewegungsmittel 30, zwei Serviceeinrichtungen 40 mit entsprechenden Einrichtungen 41 sowie ein Backend 50, das eine Prädiktion der Auslastung der Serviceeinrichtungen 40 vornimmt. In diesem Beispiel handelt es sich bei den Fortbewegungsmitteln 30 um Kraftfahrzeuge und bei den Serviceeinrichtungen 40 um Tankstellen bzw. Ladestationen. Die Einrichtungen 41 sind dementsprechend Zapfsäulen oder Ladesäulen.

Computer 31 in den Fortbewegungsmitteln 30 sammeln kontinuierlich Daten der Fortbewegungsmittel 30, z.B. Position, Route, Verbrauch, Tankfüllung oder Akkustand, etc. Den Computern 31 sind zudem die benötigte Treibstoffsorte bzw. der Typ des Ladeanschlusses bekannt. Die gesammelten Informationen I werden an das Backend 50 gesendet, beispielsweise per Mobilfunk. Bei dem Backend 50 kann es sich insbesondere um einen weiteren Computer in einem Servernetzwerk handeln. Das Backend 50 speichert die Daten in einer Datenbank 51. Eine im Backend 50 laufende Applikation liest periodisch die Daten aus der Datenbank 51 und berechnet für jedes Fortbewegungsmittel 30 und jede Serviceeinrichtung 40 in der Umgebung des Fortbewegungsmittels 30 eine Wahrscheinlichkeit W, mit der dieses Fortbewegungsmittel 30 an dieser Serviceeinrichtung 40 auftankt bzw. nachlädt. Dazu nutzt die Applikation ein trainiertes neuronales Netz 52. Für jede Serviceeinrichtung 40 werden die Wahrscheinlichkeiten W aller Fortbewegungsmittel 30 eines bestimmten Zeitfensters mit einer bestimmten Treibstoffsorte bzw. eines bestimmten Ladenanschlusstyps aufsummiert. Die Ergebnisse können wiederum in der Datenbank 51 gespeichert werden.

Wird nun eine Anfrage ANF eines Betreibers einer Serviceeinrichtung 40 über die voraussichtliche zukünftige Auslastung gestellt, z.B. über ein dafür vorgesehenes Web-Interface, so werden die Daten aus Datenbank 51 gelesen und die Werte für jede Treibstoffsorte bzw. jeden Ladeanschlusstyp als voraussichtliche Anzahl der Tankenden bzw. Ladenden für den jeweils angefragten Zeitraum zur Verfügung gestellt. Zusätzlich zu der Anzahl der Fortbewegungsmittel 30 kann erfasst werden, wieviel Treibstoff bzw. Strom das Fortbewegungsmittel 30 nachtanken bzw. nachladen wird, indem die maximale Kapazität und die aktuell noch vorhandene Füllung berücksichtigt wird. Im einfachsten Fall wird davon ausgegangen, dass die Fortbewegungsmittel 30 jeweils vollständig betankt bzw. geladen werden. Basierend auf diesen Informationen zur Auslastung AUS kann dann seitens des Betreibers der Serviceeinrichtung 40 ein Betriebsparameter P der Serviceeinrichtung 40 angepasst werden. Je nach Implementierung der erfindungsgemäßen Lösung kann das Backend 50 anstelle der Informationen zur Auslastung AUS auch direkt den angepassten Betriebsparameter P zur Verfügung stellen. Zudem besteht die Möglichkeit, dass das Bestimmen der Wahrscheinlichkeiten W oder das Aufsummieren der Wahrscheinlichkeiten W erst im Ansprechen auf eine Anfrage ANF eines Betreibers erfolgt.

Im dargestellten Beispiel wird das neuronale Netz 52 von einem dafür vorgesehenen Trainingscomputer 53 trainiert. Der Trainingscomputer 53 liest periodisch die von den Fortbewegungsmitteln 30 gesendeten Informationen I sowie die bestimmten Wahrscheinlichkeiten W aus der Datenbank 51. Mit Hilfe dieser Daten bestimmt der Trainingscomputer 53, ob und wo welches Fortbewegungsmittel 30 gerade getankt bzw. aufgeladen hat und wie akkurat die Vorhersage der Wahrscheinlichkeit W war. Die Informationen R zum Aufsuchen der Serviceeinrichtung 40, d.h. ob und wo ein Fortbewegungsmittel 30 gerade getankt bzw. aufgeladen hat, kann anhand der Position des Fortbewegungsmittels 30 und die Zunahme der Tankfüllung bzw. des Akkustandes bestimmt werden. Mit diesen Informationen trainiert der Trainingscomputer 53 das neuronale Netz 52 im Backend 50. Selbstverständlich kann das Trainieren des neuronalen Netzes 52 auch direkt im Backend 50 ohne einen zusätzlichen Trainingscomputer 53 erfolgen.

### Bezugszeichenliste

- 10: Vorrichtung
- 11: Eingang
- 12: Empfangsmodul
- 13: Auswertemodul
- 14: Betriebsmodul
- 15: Kontrollmodul
- 16: Speicher
- 17: Ausgang
- 18: Benutzerschnittstelle

- 20: Vorrichtung
- 21: Speicher
- 22: Prozessor
- 23: Eingang
- 24: Ausgang

- 30: Fortbewegungsmittel
- 31: Computer

- 40: Serviceeinrichtung
- 41: Einrichtung

- 50: Backend
- 51: Datenbank
- 52: Neuronales Netz
- 53: Trainingscomputer

- ANF: Anfrage
- AUS: Information zur Auslastung
- I: Information zu Fortbewegungsmittel
- P: Betriebsparameter
- R: Information zum Aufsuchen der Serviceeinrichtung
- W: Wahrscheinlichkeit

- S1: Empfangen von Informationen zu Fortbewegungsmitteln im Umfeld einer Serviceeinrichtung
- S2: Bestimmen von Wahrscheinlichkeiten für das Aufsuchen der Serviceeinrichtung
- S3: Anpassen eines Betriebsparameters der Serviceeinrichtung

- S10: Empfangen von Informationen zu einem Fortbewegungsmittel im Umfeld einer Serviceeinrichtung
- S11: Bestimmen einer Wahrscheinlichkeit für das Aufsuchen der Serviceeinrichtung
- S12: Empfangen von Informationen zum Aufsuchen der Serviceeinrichtung
- S13: Trainieren eines neuronalen Netzes zumindest mit den empfangenen Informationen

## Patentansprüche

1. Verfahren zum Betreiben einer Serviceeinrichtung (40) für Fortbewegungsmittel (30), mit den Schritten:
- Empfangen (S1) von Informationen (I) zu Fortbewegungsmitteln (30) in einem Umfeld der Serviceeinrichtung (40);
- Bestimmen (S2) von Wahrscheinlichkeiten (W) für die Fortbewegungsmittel (30), dass diese eine Einrichtung (41) der Serviceeinrichtung (40) aufsuchen; und
- Anpassen (S3) zumindest eines Betriebsparameters (P) der Serviceeinrichtung (40) auf Grundlage der bestimmten Wahrscheinlichkeiten (W).

2. Verfahren gemäß Anspruch 1, wobei das Anpassen (S3) des zumindest einen Betriebsparameters (P) das Zuschalten oder Abschalten einer Einrichtung (41), das Anpassen eines Tarifs oder eine Personalanpassung umfasst.

3. Verfahren gemäß Anspruch 1 oder 2, wobei die Wahrscheinlichkeiten (W) für die Fortbewegungsmittel (30), dass diese eine Einrichtung (41) der Serviceeinrichtung (40) aufsuchen, durch ein trainiertes neuronales Netz (52) bestimmt werden (S2).

4. Verfahren zum Trainieren eines neuronalen Netzes (52) zum Bestimmen einer Wahrscheinlichkeit (W) für ein Fortbewegungsmittel (30), dass dieses eine Einrichtung (41) einer Serviceeinrichtung (40) aufsucht, mit den Schritten:
- Empfangen (S10) von Informationen (I) zu einem Fortbewegungsmittel (30) in einem Umfeld der Serviceeinrichtung (40);
- Bestimmen (S11) einer Wahrscheinlichkeit (W) für das Fortbewegungsmittel (30), dass dieses eine Einrichtung (41) der Serviceeinrichtung (40) aufsucht;
- Empfangen (S12) von Informationen (R), ob das Fortbewegungsmittel (30) eine Einrichtung (41) der Serviceeinrichtung (40) aufgesucht hat; und
- Trainieren (S13) des neuronalen Netzes (52) zumindest mit den empfangenen Informationen (I, R).

5. Verfahren gemäß Anspruch 4, wobei die Informationen (R), ob das Fortbewegungsmittel (30) eine Einrichtung (41) der Serviceeinrichtung (40) aufgesucht hat, Angaben zur Nutzung der Einrichtung (41) umfassen.

6. Verfahren gemäß einem der vorherigen Ansprüche, wobei die Serviceeinrichtung (40) eine Tankstelle oder eine Ladestation ist.

7. Verfahren gemäß einem der vorherigen Ansprüche, wobei die Informationen (I) zu den Fortbewegungsmitteln (30) Angaben zu einem Ladezustand, einem Kraftstoffvorrat, einer Kraftstoffart, einer Position oder einer Route umfassen.

8. Verfahren gemäß einem der vorherigen Ansprüche, wobei die Informationen (I) zu den Fortbewegungsmitteln (30) Angaben zu einem Bediener des Fortbewegungsmittels (30) umfassen.

9. Computerprogramm mit Instruktionen, die bei Ausführung durch einen Computer den Computer zur Ausführung der Schritte eines Verfahrens gemäß einem der Ansprüche 1 bis 8 veranlassen.

10. Vorrichtung (10) zum Betreiben einer Serviceeinrichtung (40) für Fortbewegungsmittel (30), mit:
- einem Empfangsmodul (12) zum Empfangen (S1) von Informationen (I) zu Fortbewegungsmitteln (30) in einem Umfeld der Serviceeinrichtung (40);
- einem Auswertemodul (13) zum Bestimmen (S2) von Wahrscheinlichkeiten (W) für die Fortbewegungsmittel (30), dass diese eine Einrichtung (41) der Serviceeinrichtung (40) aufsuchen; und
- einem Betriebsmodul (14) zum Anpassen (S3) zumindest eines Betriebsparameters (P) der Serviceeinrichtung (40) auf Grundlage der bestimmten Wahrscheinlichkeiten (W).
